# DEMANDE DE BREVET EUROPEEN

(11) **EP 4 395 012 A2**
(43) Date de publication de la demande: **03.07.2024**
(21) Numéro de dépôt: 23220225.9
(22) Date de dépôt: 26.12.2023
(51) Int. Cl.: H01M 10/6556, H01M 50/502, H01M 50/574, A62C 3/16

(54) **CONNECTEUR DE MODULE ACCUMULATEUR ÉLECTROCHIMIQUE, À PORTION FRANGIBLE**

(30) Priorité: 26.12.2022 FR 2214512
(71) Demandeur: Commissariat à l'énergie atomique et aux énergies alternatives, 75015 Paris (FR)
(72) Inventeur: PANARIELLO, Remy, 38054 Grenoble Cedex 9 (FR); BOUVIER, Michaël, 38054 Grenoble cedex 09 (FR); ROUX, Guilhem, 38054 Grenoble cedex 09 (FR); WEICK, Clément, 38054 Grenoble cedex 09 (FR)
(74) Mandataire: INNOV-GROUP

(57) **Abrégé**

Élément d'interconnexion de module accumulateur électrochimique, adapté à interconnecter des accumulateurs électrochimiques (6), comportant une première paroi d'appui et au moins un connecteur coupe-circuit (7) disposé sur la première paroi d'appui (4), ce connecteur coupe-circuit (7) comportant :
- une enceinte à volume variable contenant un fluide sous pression et comportant une enveloppe munie d'au moins une portion frangible ;
- un contact électrique mobile adapté à être déplacé par l'enceinte à volume variable selon une direction de déconnexion ;
- un moyen élastique sollicitant l'enceinte à volume variable vers une position de repos dans laquelle le contact électrique mobile est maintenu en deçà d'une distance prédéterminée de la première paroi d'appui.

## Description

### DOMAINE TECHNIQUE

L'invention concerne le domaine des accumulateurs d'énergie électrique et concerne plus précisément le conditionnement et la mise en oeuvre physique, de manière sécurisée, d'accumulateurs électrochimiques en modules pour tout type d'application, et notamment les applications embarquées et en milieu difficile, ainsi que les applications de stockage stationnaire.

Dans ces applications embarquées ou stationnaires, notamment en milieu difficile, par exemple les accumulateurs embarqués dans des véhicules électriques ou agencés dans des équipements industriels, la sécurité des éléments permettant l'agencement et le regroupement des accumulateurs est essentielle pour garantir performances, sûreté de fonctionnement et sécurité des personnes, dans un domaine où la connectique électrique entre les accumulateurs est une problématique majeure.

### ART ANTÉRIEUR

La demande de brevet DE102011005633 décrit un accumulateur électrochimique qui comporte un dispositif de coupure mécanique des connexions électriques. Le dispositif est doté d'un actionneur adapté à déplacer l'une des bornes de l'accumulateur pour interrompre une opération de charge en fonction des indications données par des capteurs.

### EXPOSÉ DE l'INVENTION

L'invention a pour but d'améliorer les moyens d'interconnexion pour accumulateurs électrochimiques de l'art antérieur, et leur mise en oeuvre.

À cet effet, l'invention vise un élément d'interconnexion de module accumulateur électrochimique, adapté à interconnecter des accumulateurs électrochimiques, et comportant une première paroi d'appui et au moins un connecteur coupe-circuit disposé sur la première paroi d'appui, ce connecteur coupe-circuit comportant :
- une enceinte à volume variable contenant un fluide sous pression et comportant une enveloppe munie d'au moins une portion frangible ;
- un contact électrique mobile adapté à être déplacé par l'enceinte à volume variable selon une direction de déconnexion ;
- un moyen élastique sollicitant l'enceinte à volume variable vers une position de repos dans laquelle le contact électrique mobile est maintenu en deçà d'une distance prédéterminée de la première paroi d'appui.

Le moyen élastique sollicite l'enceinte à volume variable vers sa position de repos lorsque le fluide de l'enceinte n'est plus sous pression.

Selon un autre objet, l'invention vise un module accumulateur électrochimique comportant au moins un accumulateur électrochimique et un élément d'interconnexion tel que décrit précédemment.

L'invention permet de garantir un haut niveau de sécurité notamment pour un pack batterie comportant des modules accumulateurs électrochimiques, eux-mêmes constitués d'un assemblage d'accumulateurs interconnectés. En effet, certains accumulateurs peuvent présenter des risques de surchauffe, voire des risques d'incendie, en cas d'avarie. C'est le cas notamment des accumulateurs de chimie lithium-ion, qui peuvent présenter des risques, d'autant plus conséquents que ces accumulateurs peuvent être agencés au sein de modules regroupés en batteries de forte puissance et de tensions de plusieurs centaines de volts, comme les batteries embarquées par les véhicules électriques. Une avarie au sein d'un accumulateur peut ainsi entrainer, par exemple dans un véhicule ou une application industrielle, d'importants risques notamment en matière de sécurité des personnes.

Des moyens existent déjà, notamment au sein des véhicules électriques, pour contenir un tel risque. L'invention ajoute un niveau supplémentaire de sécurité, grâce auquel un accumulateur défectueux, ou plusieurs accumulateurs au sein d'un module, sont déconnectés du circuit rapidement, avant que l'avarie ne se transmette aux accumulateurs voisins. Une avarie est ainsi circonscrite au plus près de son départ, et cette déconnexion est réalisée selon un mode de sécurité passive, c'est-à-dire sans aucun capteur, aucun traitement d'information, ni aucun apport d'énergie.

Si un accumulateur se dégrade et entraine une surchauffe, des projections, voire une explosion, cet accumulateur créera une fuite de fluide dans le connecteur coupe-circuit en perforant l'enceinte à volume variable au niveau de la portion frangible de son enveloppe, ce qui entrainera une diminution de la pression dans l'enceinte à volume variable. L'enceinte à volume variable, avec éventuellement d'autres enceintes à volume variable connectées ensemble, subira une diminution de volume et entrainera une déconnexion des accumulateurs concernés, sans utilisation de source d'énergie ou d'élément actif pour cette déconnexion.

Le niveau supplémentaire de sécurité ainsi obtenu, grâce à ces moyens de sécurité passive, agissent au plus près de l'avarie.

Dans ce cadre, l'architecture électrique peut être prévue pour que la sécurité passive entrainant une déconnexion localisée puisse permettre d'assurer une continuité de service, éventuellement dégradée, en plus de l'aspect sécuritaire. Cette fonction de continuité de service en cas de défaillance d'un ou plusieurs accumulateurs, peut également être pilotée par un capteur, de manière préventive.

L'invention offre une plus grande liberté et une plus grande sécurité dans les procédés d'assemblage de batteries, de montage et démontage des accumulateurs au sein des modules constituant ces batteries, notamment dans le cadre du démantèlement des batteries en vue de leur recyclage ou d'opérations de maintenance. De plus, une sécurité optimale peut être assurée durant les phases de démantèlement, car les accumulateurs seront déconnectés les uns des autres avant l'ouverture de la batterie, soit en cas d'avarie ayant eu lieu antérieurement, soit à la faveur d'une déconnexion déclenchée volontairement, ce qui peut limiter les risques d'électrisation mais aussi de court-circuit.

L'invention permet des connexions électriques avec une meilleure homogénéité des résistances de contact, ce qui procure des connexions électriques de meilleure qualité, avec une plus grande tenue dans le temps. L'utilisation d'un réseau fluidique mutualisé pour la connexion de plusieurs accumulateurs permet de maintenir une pression homogène au niveau des contacts électriques. Même si les tolérances mécaniques et dimensionnelles ont pour conséquence une disparité dans les dimensions des logements d'accumulateurs (ce qui est inévitable), tous les accumulateurs bénéficieront d'une connexion électrique de même résistance (car pression de contact identique), ce qui procure une longévité plus homogène entre les accumulateurs dans les cycles charge/décharge, à la différence de l'art antérieur qui souffre d'un potentiel vieillissement localisé de certains éléments, de manière hétérogène.

Ces connexions présentent par ailleurs une meilleure tenue aux chocs et aux vibrations, ce qui est primordial notamment pour des applications embarquées. Un rôle d'amortissement vis-à-vis des chocs peut être obtenu en réduisant les contraintes associées.

Il est par ailleurs possible d'associer différents connecteurs coupe-circuits en différents tronçons d'un réseau fluidique, ce qui permet de rendre indépendantes la connexion et la déconnexion de groupes prédéterminés d'accumulateurs au sein d'un module, permettant par exemple des opérations de maintenance telle que l'identification fine de problèmes d'équilibrage de charge, ou la mise en oeuvre de mesure de rééquilibrage en chargeant ou déchargeant une portion seulement des accumulateurs d'un même module.

L'invention permet en outre une simplification de conception par rationalisation du nombre de pièces, en mutualisant la fonction de contention des accumulateurs et de connexion électrique, avec un gain potentiel en masse, volume et cout.

L'élément d'interconnexion selon l'invention peut comporter les caractéristiques additionnelles suivantes, seules ou en combinaison :
- l'enceinte à volume variable est formée par une enveloppe élastiquement déformable comportant ladite zone frangible ;
- l'enveloppe élastiquement déformable est formée par un prolongement de matière de la première paroi d'appui ;
- l'enveloppe élastiquement déformable présente une forme cylindrique avec au moins une zone de section réduite et au moins une zone frangible. La zone de section réduite et la zone frangible peuvent être la même zone ayant ces deux caractéristiques ;
- le contact électrique mobile est formé par un revêtement de surface conducteur appliqué sur l'enceinte à volume variable ;
- l'enceinte à volume variable comporte une membrane souple disposée dans la première paroi d'appui ;
- la portion frangible est constituée d'un matériau dont la température de fusion est inférieure à 120°C ;
- la première paroi d'appui et l'enceinte à volume variable sont faits d'une seule pièce ;
- l'élément d'interconnexion comporte une pluralité desdits connecteurs coupe-circuit dont les enceintes à volume variable sont fluidiquement reliées entre elles par un réseau de conduits fluidiques ;
- le réseau de conduits fluidiques comporte une pluralité de tronçons indépendants, chacun de ces tronçons comportant au moins un conduit fluidique et une pluralité d'enceintes à volume variable des connecteurs coupe-circuit, fluidiquement reliés entre eux ;
- l'enceinte à volume variable est fluidiquement reliée à un raccord fluidique saillant ;
- l'élément d'interconnexion comporte un moyen de mise en pression d'un fluide, fluidiquement relié à l'enceinte à volume variable ;
- l'élément d'interconnexion comporte un boitier qui comprend la première paroi d'appui et qui comprend en outre : une deuxième paroi d'appui, en vis-à-vis de la première paroi d'appui ; un logement pour un accumulateur électrochimique, ce logement s'étendant entre la première paroi d'appui et la deuxième paroi d'appui.
- l'élément d'interconnexion comporte en outre au moins un desdits connecteurs coupe-circuit monté sur la deuxième paroi d'appui ;
- l'élément d'interconnexion comporte un boitier qui comprend la première paroi d'appui ainsi que des moyens de fixation du boitier sur un accumulateur électrochimique ;
- l'enceinte à volume variable comporte une extension de prolongement, faisant partie de ladite portion frangible, formée d'une enveloppe creuse en communication fluidique avec l'enceinte à volume variable.

Le module selon l'invention peut comporter les caractéristiques additionnelles suivantes, seules ou en combinaison :
- la portion frangible est disposée en vis-à-vis de l'accumulateur ;
- l'extension est disposée en vis-à-vis d'un évent de l'accumulateur ;
- au moins une partie de la portion frangible est en vis-à-vis d'un évent de l'accumulateur, préférentiellement sur un chemin d'éventage des gaz.

### PRÉSENTATION DES FIGURES

- la figure 1 illustre un module d'accumulateur électrochimique selon l'invention ;
- la figure 2 illustre le boitier du module d'accumulateur électrochimique de la figure 1 ;
- la figure 3 illustre le boitier de la figure 2, avec son réseau de conduits fluidiques visible ;
- la figure 4A et la figure 4B sont des vues schématiques d'un module accumulateur électrochimique selon l'invention, avec son connecteur coupe-circuit en position activée, pour deux modes de réalisation différents ;
- la figure 5A et la figure 5B sont des vues similaires respectivement aux figures 4A et 4B, avec le connecteur coupe-circuit en position désactivée ;
- la figure 5C est une variante de la figure 5A ;
- la figure 6 est une vue similaire à la figure 4A, pour un module accumulateur électrochimique selon un autre mode de réalisation de l'invention ;
- la figure 7 est une vue en perspective d'un module accumulateur électrochimique selon un autre mode de réalisation de l'invention ;
- la figure 8 est une vue éclatée partielle de module accumulateur électrochimique de la figure 7 ;
- la figure 9 est une vue de dessous de la première paroi d'appui du boitier du module accumulateur électrochimique de la figure 8 ;
- la figure 10 est une vue de détail de la coopération des connecteurs coupe-circuit avec les accumulateurs du module accumulateur électrochimique de la figure 7 ;
- la figure 11 est une vue éclatée d'un module accumulateur électrochimique selon un autre mode de réalisation de l'invention ;
- la figure 12 est une vue en perspective de la première paroi d'appui du boitier du module accumulateur électrochimique de la figure 11 ;
- la figure 13 est une vue de dessus du support d'actionneurs de la première paroi d'appui de la figure 12 ;
- la figure 14 est une vue de dessous du support d'actionneur de la figure 13, les connecteurs coupe-circuit étant en position désactivée ;
- la figure 15 est une vue de dessous du support d'actionneur de la figure 13, les connecteurs coupe-circuit étant en position activée ;
- la figure 16, la figure 17, la figure 18, et la figure 19 illustrent un procédé de connexion ou de déconnexion d'un module accumulateur électrochimique ;
- la figure 20 représente un module accumulateur électrochimique avec des éléments d'interconnexion selon un autre mode de réalisation ;
- la figure 21 et la figure 22 illustrent en perspective l'un des éléments d'interconnexion de la figure 20 ;
- la figure 23 est une vue en coupe de l'élément d'interconnexion des figures 21 et 22 ;
- la figure 24 est une vue similaire à la figure 20 pour un autre mode de réalisation des éléments d'interconnexion ;
- la figure 25 est une vue en coupe de l'un des éléments d'interconnexion de la figure 24 ;
- la figure 26 est une vue similaire à la figure 24, pour une variante des éléments d'interconnexion ;
- la figure 27 est une vue schématique relative à un autre mode de réalisation d'un module accumulateur électrochimique ;
- la figure 28 est une vue schématique relative à un autre mode de réalisation d'un module accumulateur électrochimique.

Les éléments similaires et communs aux divers modes de réalisation portent les mêmes numéros de renvoi aux figures.

### DESCRIPTION DÉTAILLÉE

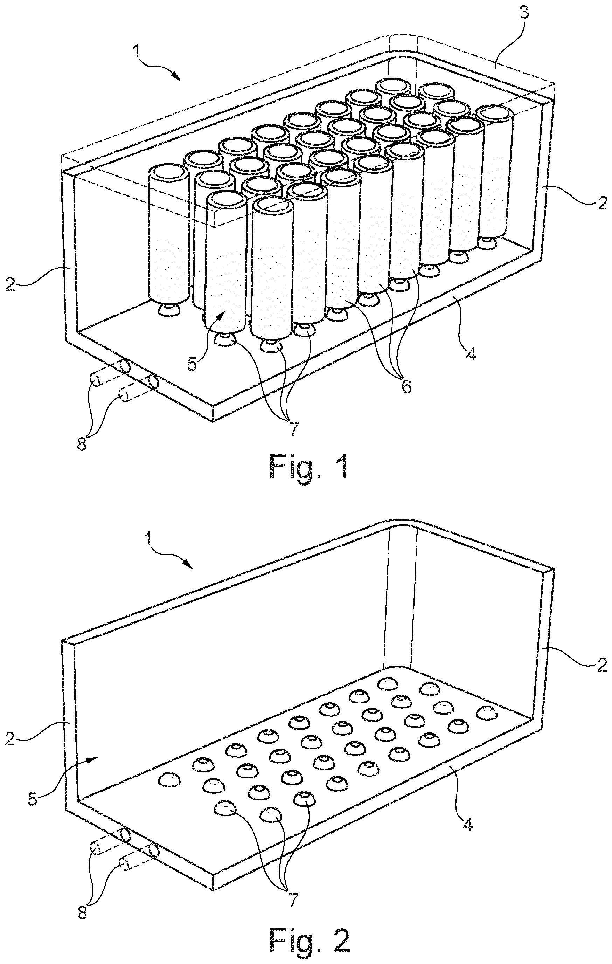

La figure 1 illustre un module accumulateur électrochimique, comportant un élément d'interconnexion selon l'invention, permettant d'interconnecter plusieurs accumulateurs au sein de ce module. Cet élément d'interconnexion comporte, dans le présent exemple, un boitier 1 muni de connecteurs coupe-circuit.

Le boitier 1 est destiné à maintenir et à connecter des accumulateurs pour former un module accumulateur électrochimique. Ces modules sont généralement associés pour constituer un pack batterie, par exemple pour un véhicule électrique ou toute autre application exigeante du point de vue des conditions de fonctionnement et de la sécurité.

Le boitier 1 comporte des parois latérales 2, une paroi inférieure ici dénommée « première paroi d'appui 4 », et une paroi supérieure ici dénommée « deuxième paroi d'appui 3 ». Sur la vue en perspective de la figure 1, la deuxième paroi d'appui 3 et les parois latérales 2 du premier plan sont représentées en transparence pour rendre visible l'intérieur du boitier 1.

Le boitier 1 comporte des logements 5 qui s'étendent entre la deuxième paroi d'appui 3 et la première paroi d'appui 4, et des accumulateurs 6 prennent place dans ces logements 5. Ces logements 5 assurent le maintien mécanique des accumulateurs 6. Les logements 5 (non représentés) peut être constitués de tout élément de maintien latéral et longitudinal des accumulateurs 6. Autant d'accumulateurs 6 que nécessaire peuvent être ainsi agrégés au sein du boitier 1, selon une architecture en série et/ou en parallèle pour atteindre la tension et la capacité souhaitées.

Du côté de la première paroi d'appui 4, le boitier 1 comporte des connecteurs coupe-circuit 7 qui permettent, pour chaque logement 5, de maintenir la connexion de l'accumulateur 6 correspondant, et de déconnecter cet accumulateur 6 en cas d'avarie. Dans tout le présent texte, par convention :
- la première paroi d'appui 4 génère la connexion électrique, et porte le ou les connecteurs coupe-circuit 7 ;
- la deuxième paroi d'appui 3 est la paroi située à l'opposé du connecteur coupe-circuit 7. Cette paroi peut également avoir une fonction de connexion électrique (lorsque l'accumulateur dispose d'une borne du côté de cette paroi) avec un contact électrique fixe 9.

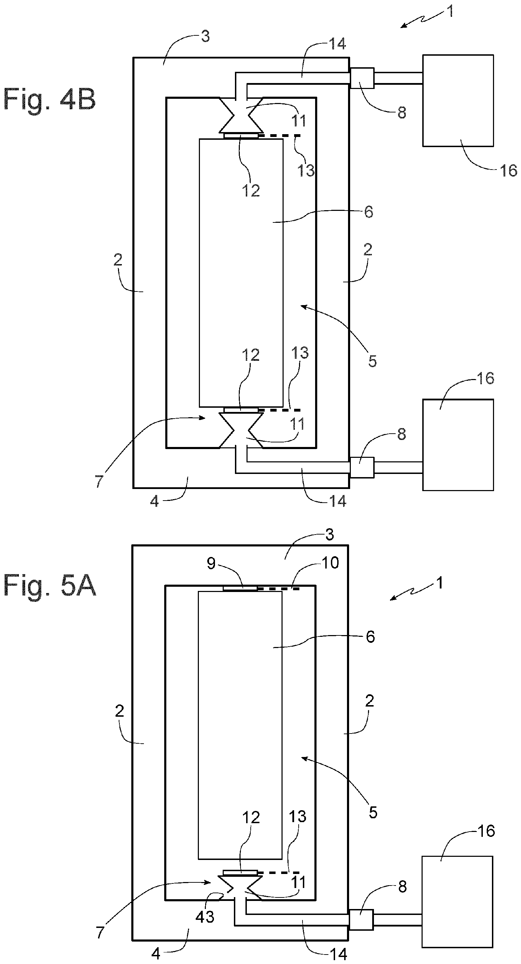

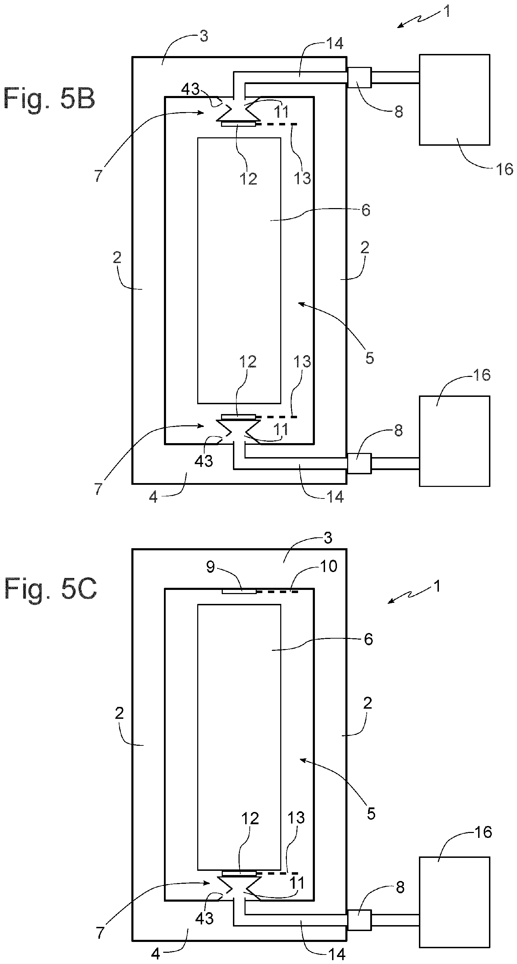

De plus, la deuxième paroi d'appui 3 peut optionnellement jouer le même rôle que la première paroi d'appui, en portant également des connecteurs coupe-circuit 7 (voir mode de réalisation des figures 4B, 5B).

Dans l'exemple illustré, les accumulateurs 6 sont des accumulateurs électrochimiques cylindriques, étant entendu que les accumulateurs 6 peuvent être de tout autre type connu, notamment prismatique, tant que ces accumulateurs présentent au moins une borne de connexion externe adaptée à coopérer avec les connecteurs coupe-circuit 7 disposés au niveau de la première paroi d'appui 4.

Les accumulateurs 6 cylindriques de cet exemple comportent une électrode à chacune de leurs extrémités, l'une de ces électrodes étant électriquement connectée du côté de la deuxième paroi d'appui 3, et l'autre électrode étant connectée de manière déconnectable, par le biais de l'invention, du côté de la première paroi d'appui 4.

La figure 2 est similaire à la figure 1, sans les accumulateurs 6 et rend visible l'agencement des connecteurs coupe-circuit 7 sur la première paroi d'appui 4.

Optionnellement, le boitier 1 comporte de plus des raccords fluidiques 8, qui sont dans cet exemple au nombre de deux. Ces raccords fluidiques 8 sont reliés aux connecteurs coupe-circuit 7 par un réseau de conduits fluidiques 14.

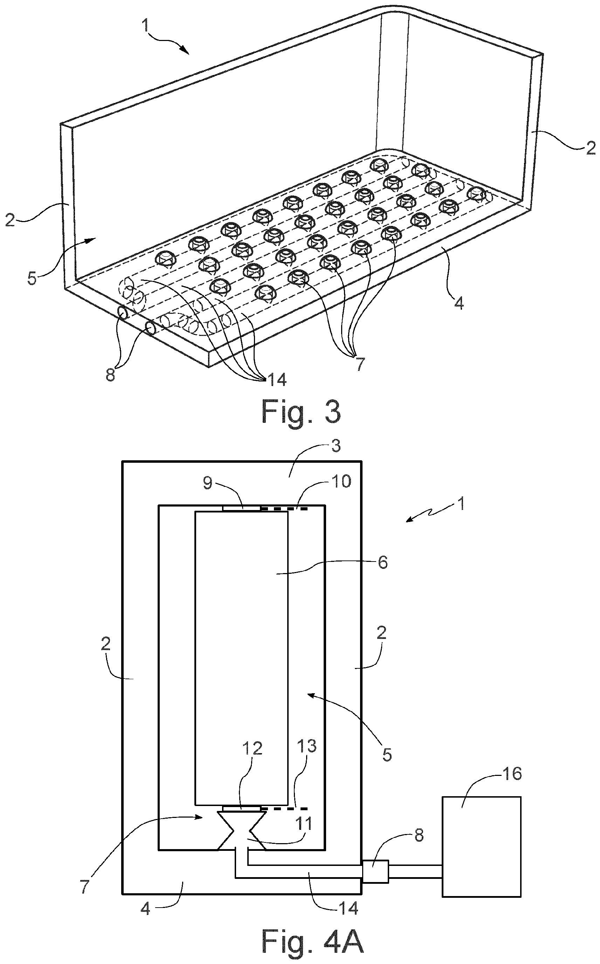

La figure 3 est une vue identique à la figure 2 mais montrant la première paroi d'appui 4 en transparence pour rendre visible le cheminement du réseau de conduits fluidiques 14.

Dans cet exemple, le réseau comporte donc plusieurs conduits fluidiques 14, correspondant aux différents connecteurs coupe-circuit 7, s'étendant dans l'épaisseur de la première paroi d'appui 4 selon deux tronçons indépendants correspondant chacun à l'un des deux raccords fluidiques 8. Chaque tronçon du réseau de conduits fluidiques 14 forme un volume non cloisonné, regroupant plusieurs conduits fluidiques 14 et agissant sur un groupe de connecteurs coupe-circuit 7.

Dans chacun de ces tronçons, tous les connecteurs coupe-circuit 7 sont fluidiquement connectés entre eux et sont connectés au raccord fluidique 8 correspondant. Ces deux tronçons peuvent être gérés indépendamment, c'est-à-dire que les connecteurs coupe-circuit 7 d'un tronçon peuvent être activés et désactivés indépendamment des connecteurs coupe-circuit 7 de l'autre tronçon.

Les conduits fluidiques 14 sont des conduits étanches dont le diamètre est, dans cet exemple de l'ordre de 1 à 5 mm.

L'activation de tous les connecteurs coupe-circuit 7 d'un tronçon se fait par une mise en pression (éventuellement par le raccord fluidique 8), et le maintien de cette pression, dans ce tronçon. La désactivation des tous les connecteurs coupe-circuit 7 d'un tronçon se fait par une perte de pression dans ce tronçon, en cas d'avarie d'un accumulateur 6 apte à perforer un connecteur coupe-circuit 7.

Le réseau de conduits fluidiques 14 peut comporter autant de tronçons que nécessaire en fonction de l'architecture souhaitée et des possibilités souhaitées de découplage pour les accumulateurs 6, notamment à des fins de maintenance, de test, d'équilibrage de charges, de déconnexion de sécurité ou de continuité de service, etc. Ceci est particulièrement avantageux pour les accumulateurs de chimie lithium, et pour les systèmes de gestion de batterie BMS (« Battery Management System », en anglais) avancés, qui sont à même de tirer parti de tels regroupements indépendants des accumulateurs 6 d'un même boitier 1.

Les figures 4A, 4B et 5A, 5B sont des vues schématiques en coupe d'un module accumulateur électrochimique comportant un boitier 1 avec, dans cet exemple simplifié, un seul accumulateur 6.

Les figures 4A et 5A correspondent à un mode de réalisation où seule la première paroi d'appui 4 est munie de connecteurs coupe-circuit 7, comme dans le mode de réalisation des figures 1 à 3, la deuxième paroi d'appui 3 ne portant que des contacts électriques fixes 9. En variante, dans le cas où les accumulateurs 6 ne comportent pas d'électrodes du côté de la deuxième paroi d'appui 3, ces parois ne comportent aucun contact électrique. Les figures 4B et 5B correspondent à un mode de réalisation où la deuxième paroi d'appui 3 joue également un rôle de connexion, en portant également des connecteurs coupe-circuit 7, chaque accumulateur étant ainsi connecté par deux connecteurs coupe-circuit 7.

En référence au mode de réalisation des figures 4A et 5A, la deuxième paroi d'appui 3 comporte un contact électrique fixe 9 contre lequel l'accumulateur 6 est sollicitée, de sorte à connecter électriquement cette électrode de l'accumulateur 6 avec le reste du circuit, c'est-à-dire avec les autres accumulateurs 6 (lorsque le boitier comporte plusieurs accumulateurs), et avec un bornier externe du boitier 1 pour la connexion de l'accumulateur à la charge à alimenter électriquement, et au circuit de recharge. Cette connexion du contact électrique fixe 9 au reste du circuit est schématisée par un trait en pointillés 10 sur les figures 4A à 6.

Le connecteur coupe-circuit 7 qui est disposé sur la première paroi d'appui 4 comporte une enceinte à volume variable 11 qui est solidaire d'un contact électrique mobile 12.

Dans cet exemple, le contact électrique mobile 12 est fixé sur la partie supérieure de l'enceinte 11 à volume variable (le terme supérieur est ici employé compte tenu de l'orientation des figures 3 et 4, qui peut bien entendu varier), c'est-à-dire du côté de l'emplacement 5 de l'accumulateur 6. La figure 4A illustre l'enceinte à volume variable 11 dans une configuration de volume maximal et la figure 5A illustre l'enceinte à volume variable 11 dans une configuration de volume minimal.

La variation du volume de l'enceinte 11 permet au contact électrique mobile 12 d'être mobile suivant une direction de connexion, en direction de la deuxième paroi d'appui 3. La direction de connexion correspond dans cet exemple à l'axe longitudinal de l'enceinte 11 à volume variable et de l'accumulateur 6 correspondant. L'accumulateur 6 qui est disposé dans le logement 5 peut être pressé entre le contact électrique fixe 9 et le contact électrique mobile 12 qui est entrainé par l'enceinte 11 à volume variable. Le contact électrique mobile 12 est ainsi adapté à être déplacé par l'enceinte 11 à volume variable en direction de la deuxième paroi d'appui 3, et donc de l'accumulateur 6 lorsqu'il est en place dans son logement 5.

De même que pour le contact électrique fixe 9, le contact électrique mobile 12 est électriquement relié au reste du circuit électrique par un conducteur de jonction 13 qui est schématisé sur les figures 4A à 6 par un trait en pointillés.

Dans l'exemple simplifié des figures 4A, 5A, et 5C, le réseau de conduits fluidiques 14 ne comporte qu'un seul conduit fluidique 14 correspondant au connecteur coupe-circuit 7 unique.

Le réseau de conduits fluidiques 14 raccorde l'enceinte 11 à volume variable du connecteur coupe-circuit 7 avec un raccord fluidique 8 saillant du boitier 1.

Le connecteur coupe-circuit 7 est dit activé lorsque l'intérieur de l'enceinte 11 à volume variable est mis à une pression supérieure à la pression régnant à l'extérieur de cette enceinte ; et le connecteur coupe-circuit 7 est dit désactivé lorsque l'intérieur de l'enceinte 11 à volume variable est mis à une pression inférieure ou égale à la pression régnant à l'extérieur de cette enceinte.

Dans cet exemple, le réseau de conduits fluidiques 14 est directement pratiqué dans l'épaisseur de la première paroi d'appui 4. Un conduit fluidique 14 débouche ainsi par l'une de ses extrémités à l'intérieur de l'enceinte 11 à volume variable et est raccordé par l'autre de ses extrémités au raccord fluidique 8 qui est ici également monté sur la première paroi d'appui 4.

L'enceinte 11 à volume variable est remplie d'un fluide sous pression. Dans le présent exemple, l'enceinte à volume variable 11 est connectée au conduit fluidique 14 qui permet son remplissage en fluide et sa mise en pression. Les figures 4A à 5C illustrent le moyen de mise en pression 16 qui peut être utilisé pour mettre en pression l'enceinte 11 à volume variable via le raccord fluidique 8. Une fois que l'enceinte 11 à volume variable a été mise en pression, le moyen de mise en pression 16 peut être déconnecté, et le raccord fluidique obturé. En variante, le moyen de mise en pression 16 peut rester connecté à l'enceinte 11 de volume variable et piloter la pression interne de cette dernière.

Plusieurs autres options sont possibles pour obtenir une telle enceinte 11 à volume variable contenant un fluide sous pression. Par exemple, en variante de ce qui est illustré, l'enceinte à volume variable 11 peut être une enceinte fermée, remplie du fluide sous pression lors de sa fabrication et directement montée sur la première paroi d'appui 4. Dans ce cas, le connecteur coupe-circuit 7 peut ne pas comporter de conduits fluidiques dans la première paroi d'appui 4.

Sur la figure 4A, le connecteur coupe-circuit 7 est représenté en position activée, c'est-à-dire que l'enceinte 11 à volume variable est sous pression, ce qui se traduit en pression de contact dans les deux connexions électriques de l'accumulateur 6 qui est inséré dans le logement 5, entre le contact électrique fixe 9 et le contact électrique mobile 12. Sur la figure 5A, le connecteur coupe-circuit 7 est représenté en position désactivée, c'est-à-dire dans une configuration où la pression dans l'enceinte 11 à volume variable est inférieure ou égale à la pression à l'extérieur de cette enceinte, du fait d'une perforation 43 survenue suite à une avarie, de sorte que cette dernière adopte une position de repos qui maintient le contact électrique mobile 12 à une distance de la deuxième paroi d'appui 3 qui est suffisante pour que l'accumulateur 6 n'ait plus ses deux électrodes connectées. Sur la figure 5A, l'accumulateur 6 est maintenu fixe dans son logement 5, et seule l'une des électrodes de l'accumulateur 6 touche l'un des contacts électriques, et l'accumulateur 6 est donc ainsi électriquement déconnecté du reste du circuit.

L'avarie d'un accumulateur 6 entrainant le passage en position désactivée du connecteur coupe-circuit 7, provoque la perforation 43 par fusion ou par dégradation mécanique de l'enveloppe de l'enceinte 11 à volume variable.

La figure 5C illustre une variante de la figure 5A, où l'accumulateur 6 est libre de coulisser dans le logement 5, et sa déconnexion a alors lieu par un mouvement vertical de l'accumulateur 6 lié à la gravité.

Dans cet exemple, le déplacement du contact électrique mobile 12, entre ses deux positions, est de l'ordre de 2 à 10 mm.

Le moyen de mise en pression 16 est réalisé par tout moyen permettant la mise en pression et le maintien d'une pression dans l'enceinte 11 à volume variable. Le moyen de mise en pression 16 peut être par exemple un compresseur pneumatique comprimant de l'air ou un gaz inerte dans le réseau de conduits fluidiques 14. La mise en pression de l'enceinte 11 à volume variable est alors réalisée en comprimant un gaz et en maintenant sa pression dans le réseau de conduits fluidiques 14 (ou dans la seule enceinte 11 à volume variable si le connecteur coupe-circuit 7 est dépourvu de conduits fluidiques).

Le moyen de mise en pression 16 peut être également, en variante, un dispositif adapté à mettre en pression un fluide non compressible. Le réseau de conduits fluidiques 14 serait alors plein d'un fluide hydraulique tel que de l'huile ou de l'eau, et qui remplirait également l'enceinte 11 à volume variable. La mise en pression et le maintien d'une pression dans l'enceinte 11 à volume variable seraient alors assurés par le moyen de mise en pression 16, éventuellement grâce à un tampon pneumatique ou tout autre dispositif élastique.

L'enceinte 11 à volume variable peut être formée par une enveloppe élastiquement déformable. Dans le présent exemple, l'enceinte 11 à volume variable est réalisée dans le même matériau que la première paroi d'appui 4, en continuité de matière avec cette paroi. Le matériau constituant la première paroi d'appui 4 est alors choisi, par exemple parmi les polymères, comme un matériau dont la rigidité est suffisante pour que le boitier 1 présente les caractéristiques mécaniques requises pour la contention des éléments qu'il contient (en prévoyant une épaisseur suffisante de ce matériau pour ses parois 2, 3, 4), et en prévoyant une épaisseur d'enceinte 11 suffisamment faible pour que l'enveloppe formant cette enceinte 11 soit flexible et, par cette déformation élastique, permette le déplacement du contact électrique mobile 12 (mouvement de translation). La première paroi d'appui 4 peut avoir une épaisseur de l'ordre d'un à trois centimètres, et l'enveloppe constituant l'enceinte 11 à volume variable peut avoir une épaisseur de l'ordre de 0,5 mm.

Pour garantir sa perforation lors d'une avarie, la portion frangible de l'enceinte à volume variable 11 (voire l'ensemble de cette enceinte 11) est de préférence constituée d'un matériau dont la température de fusion est inférieure à 120°C, et de préférence dans la plage 80-120°C.

Dans le présent exemple, l'enceinte 11 à volume variable est réalisée par une enveloppe élastiquement déformable de forme cylindrique, et comporte au moins une zone de section réduite, de sorte que l'enceinte 11 agit comme un soufflet. En variante, toute association de forme et/ou de matériau permettant la réalisation d'une enceinte 11 à volume variable peut être envisagée.

De plus l'enveloppe de l'enceinte 11 à volume variable comporte au moins une zone frangible. Cette zone frangible est une zone destinée à être rompue en cas d'avarie de l'accumulateur 6 qui aurait pour conséquence un échauffement dangereux, une projection d'acide ou d'autres solides ou fluides à haute température, ou encore une explosion de la cellule 6. Dans le présent exemple, l'ensemble de l'enveloppe constituant l'enceinte 11 à volume variable constitue une telle zone frangible par :
- le choix de l'épaisseur de cette enceinte (ici de l'ordre de 0,5 mm) ;
- le choix du matériau de cette enceinte, qui doit présenter une température de fusion qui est supérieure à la température de fonctionnement de l'accumulateur, notamment lors de la charge, et qui est inférieure à la température à laquelle l'enceinte 11 sera soumise lors d'une avarie ;
- le choix de la localisation de portions de l'enceinte 11 à volume variable.

Le choix de la localisation de portions de l'enceinte 11 à volume variable permet de créer une ou des zones frangibles, en choisissant des régions au contact avec une zone de l'accumulateur fortement impactée par toute avarie. Par exemple, au travers d'un contact physique avec une borne de l'accumulateur, les bornes (généralement métalliques) étant des voies privilégiées de propagation d'un échauffement de l'accumulateur. De façon préférentielle, cette localisation est choisie au contact ou à proximité, et/ou dans l'axe de la borne positive de la cellule, qui classiquement, pour une cellule cylindrique, comporte le chemin de dégagement des gaz en cas d'éventage de la cellule (ouverture de la cellule pour évacuer une surpression interne, avec projection de gaz et matières sous pression et à haute température).

Les figures 4B et 5B illustrent un mode de réalisation comportant un connecteur coupe-circuit 7 sur la première paroi d'appui 4, de la même manière que le mode de réalisation des figures 4A et 5B, et comportant en outre un deuxième connecteur coupe-circuit 7 sur la deuxième paroi d'appui 3. La deuxième paroi d'appui 3 joue donc ici le même rôle que la première paroi d'appui 4. L'accumulateur 6 est connecté et déconnecté par deux connecteurs coupe-circuit 7 similaires, à ses deux extrémités opposées.

Dans ce mode de réalisation, l'accumulateur 6 est de préférence maintenu fixe dans son logement 5.

Sur la figure 4B, les deux connecteurs coupe-circuit 7 sont représentés en position activée, c'est-à-dire que le moyen de mise en pression 16 maintient une pression dans les deux enceintes 11 à volume variable, qui se traduit en pression de contact dans les deux connexions électriques de l'accumulateur 6, entre les deux contacts électriques mobiles 12. Sur la figure 5B, les connecteurs coupe-circuit 7 sont représentés en position désactivée, c'est-à-dire dans une configuration où le moyen de mise en pression 16 ne maintient plus une pression dans les deux enceintes 11 à volume variable, du fait de la perforation 43 survenue suite à une avarie, cette pression étant alors inférieure ou égale à la pression à l'extérieur de ces enceintes, de sorte que ces dernières adoptent une position de repos qui maintient les contacts électriques mobiles 12 à une distance de la paroi opposée qui est suffisante pour que l'accumulateur 6 n'ait plus ses électrodes connectées. Sur la figure 5B, l'accumulateur 6 est maintenu fixe dans son logement 5, tandis que les deux contacts mobiles 12 sont écartés de l'accumulateur 6 qui est donc ainsi électriquement déconnectée du reste du circuit.

Chaque réseau de conduits fluidiques 14, relatifs chacun à l'un des connecteurs électriques 7, sont ici illustrés comme étant indépendants, chacun avec son propre moyen de mise en pression 16. En variante ces réseaux peuvent être fluidiquement connectés, avec un seul moyen de mise en pression 16 et la déconnexion des deux bornes de l'accumulateur 6 aura alors lieu simultanément en cas d'avarie.

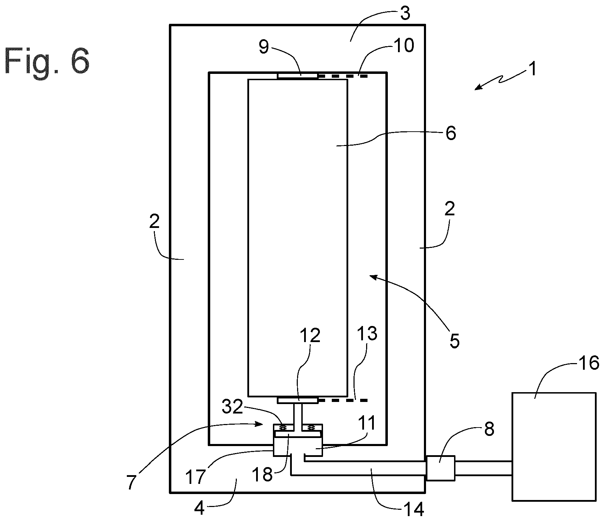

La figure 6 illustre un mode de réalisation dans lequel l'enceinte 11 à volume variable est réalisée par un vérin 17. Le vérin 17 est monté sur la première paroi d'appui 4, et l'une des chambres du vérin 17 forme l'enceinte 11. Le contact électrique mobile 12 est couplé au piston 18 du vérin 17 (dans cet exemple, le contact électrique mobile est solidaire de la tige du piston 18).

Dans ce mode de réalisation de la figure 6, les portions frangibles sont constituées par les portions de paroi de la chambre du vérin 17 qui forme l'enceinte 11 à volume variable, et qui sont exposées à l'intérieur du logement 5, c'est-à-dire qui sont exposé à une avarie de l'accumulateur 6. Ces portions frangibles sont conçues de même qu'expliqué précédemment, en ce qui concerne le choix du matériau, sa forme et son épaisseur, pour être adapté à subir une perforation en cas d'avarie.

Le connecteur coupe-circuit 7 comporte de plus un moyen élastique sollicitant l'enceinte à volume variable vers une position de repos dans laquelle le contact électrique mobile 12 est maintenu à l'écart de la deuxième paroi d'appui 3 d'une distance supérieure à une distance prédéterminée. Cette distance prédéterminée est choisie, lors du dimensionnement du boitier 1 pour une application particulière, pour que lorsque le contact électrique mobile 12 est dans cette position de repos, il soit éloigné de la deuxième paroi d'appui 3 d'une distance supérieure à la dimension correspondante de l'accumulateur 6 (sa hauteur, dans l'exemple illustré), de sorte à garantir la déconnexion de cet accumulateur 6, et à supprimer le risque d'arc électrique.

Autrement dit, le moyen élastique sollicite l'enceinte 11 à volume variable vers une position de repos dans laquelle le contact électrique mobile 12 est maintenu en deçà d'une distance prédéterminée par rapport à la première paroi d'appui 4, cette distance prédéterminée garantissant que le contact électrique mobile 12 est suffisamment écarté de l'accumulateur 6 lorsque le connecteur coupe-circuit 7 est dans sa position désactivée suite à une avarie.

Dans l'exemple des figures 4A à 5B, le moyen élastique est réalisé par l'enveloppe formant l'enceinte 11 elle-même, qui présente des propriétés élastiques par le choix de son matériau et son épaisseur.

Dans l'exemple de la figure 6, le moyen élastique est constitué de ressorts 32.

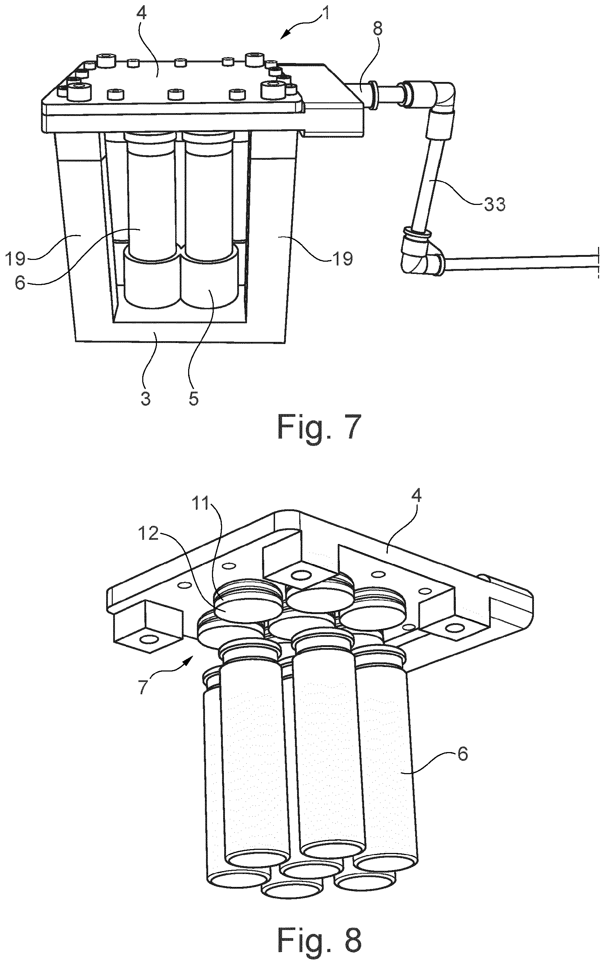

Les figures 7 à 10 illustrent un autre exemple de réalisation d'un module accumulateur électrochimique à sept accumulateurs 6 cylindriques et sept connecteurs coupe-circuit 7 qui sont du même type que celui des figures 4A et 5A. Sur les figures 7 à 10, la paroi supérieure du boitier 1 est la première paroi d'appui 4, et la paroi inférieure est la deuxième paroi d'appui 3.

La deuxième paroi d'appui 3 porte les logements 5 qui sont, dans cet exemple, des empreintes cylindriques dans lesquelles viennent se loger les accumulateurs 6.

La première paroi d'appui 4 porte trois raccords fluidiques 8 saillant latéralement depuis sa tranche, correspondant dans cet exemple à trois tronçons du réseau de conduits fluidiques 14, relatifs à trois groupes de connecteurs coupe-circuit 7. Les accumulateurs 6 sont ainsi regroupées selon trois groupes qui peuvent être déconnectés indépendamment en cas d'avarie. La figure 7 illustre l'une des tubulures pneumatiques 33 destinées à raccorder chaque raccord fluidique 8 à son moyen de mise en pression.

Dans cet exemple, les faces latérales du boitier 1 sont ouvertes et ne comportent que des colonnes 19.

La figure 8 est une vue éclatée partielle du module d'accumulateur électrochimique de la figure 7, représentant seulement la première paroi d'appui 4 en vis-à-vis d'une partie des accumulateurs 6. Chaque connecteur coupe-circuit 7 comporte une enceinte à volume variable 11 portant son contact électrique mobile 12 adapté à venir contre la borne supérieure de l'accumulateur 6 pour sa connexion, ou venir à l'écart de cette borne, pour sa déconnexion lors d'une avarie.

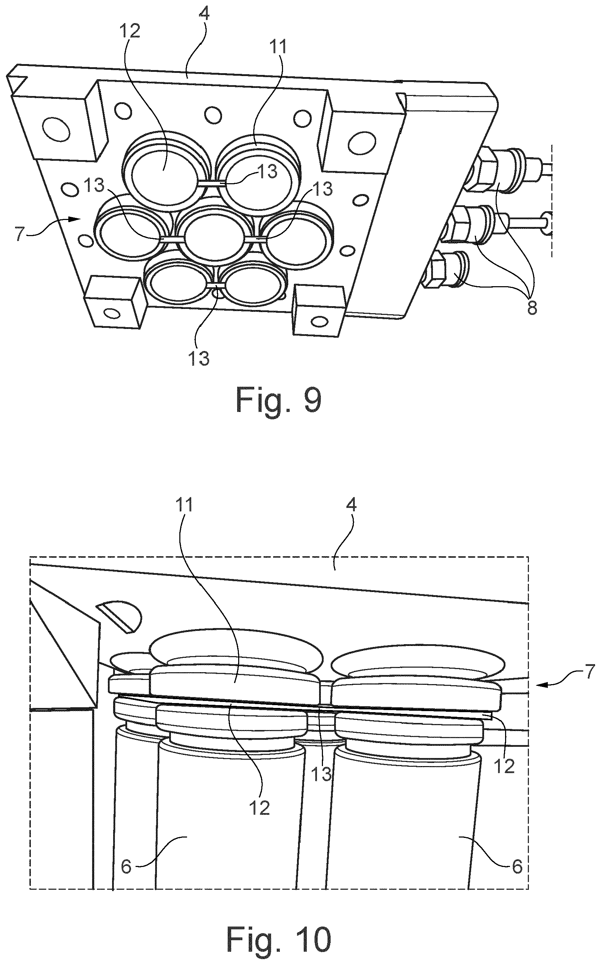

La figure 9 représente la première paroi d'appui 4 du boitier des figures 7 et 8. Les contacts électriques mobiles 12 sont reliés entre eux par les conducteurs de jonction 13 selon l'architecture électrique choisie.

Dans cet exemple, chaque enceinte 11 à volume variable présente une face plane qui porte le contact électrique mobile 12, réalisé par un disque de matériau conducteur, par exemple un disque métallique de bonne conductivité électrique.

Les contacts électriques mobiles 12 peuvent être également réalisés sous forme de revêtement de surface conducteur directement appliqué sur l'enceinte 11 à volume variable, par exemple par les procédés de galvanoplastie permettant un dépôt de type métallisation directement sur l'enveloppe formant l'enceinte 11 à volume variable.

Les conducteurs de jonction 13 peuvent être des liens conducteurs souples rapportés sur les contacts électriques mobiles 12, grâce aux techniques de type « bonding », en anglais, avec des conducteurs à section cylindrique ou parallélépipédique, avec suffisamment de longueur et de souplesse pour permettre le déplacement relatif des contacts électriques mobiles 12.

Les contacts électriques mobiles 12 ainsi que les conducteurs de jonction 13 les reliant peuvent également être réalisés conjointement par des lames métalliques rapportées sur plusieurs enceintes 11 à volume variable adjacentes, avec une lame métallique présentant suffisamment de souplesse. La figure 10 est une vue de détail de la première paroi d'appui 4 avec des connecteurs coupe-circuit 7 activés, et illustre cette variante avec lames métalliques.

La vue de détail de la figure 10 illustre également la forme de type soufflet, avec au moins une zone de plus faible section, de l'enceinte 11 à volume variable. Cette forme permet à l'enceinte 11 à volume variable :
- de pouvoir se déformer longitudinalement sous l'effet d'une augmentation de la pression à l'intérieur, permettant de rendre mobile le contact électrique mobile 12 en direction de la deuxième paroi d'appui 3 (et donc en direction de l'accumulateur 6 lorsqu'il est mis en place), selon une course suffisante pour assurer la connexion électrique ;
- de présenter une position de repos, suite à une perforation en cas d'avarie, qui correspond à un connecteur coupe-circuit 7 désactivé.

Cette forme de soufflet forme également, dans son ensemble, la zone frangible permettant à l'enceinte 11 à volume variable d'être perforée en cas d'avarie.

Dans le présent exemple, la première paroi d'appui 4, le réseau de conduits fluidiques 14, et l'enceinte 11 à volume variable, sont avantageusement réalisés d'une seule pièce, par exemple par fabrication additive, ce qui permet d'obtenir une première paroi d'appui 4 rigide (en prévoyant une épaisseur suffisante de matière), un réseau de conduits fluidiques 14 réalisé sous forme d'évidements au sein de la matière dans l'épaisseur de la première paroi d'appui 4, et l'enceinte 11 à volume variable (en prévoyant une enveloppe d'épaisseur suffisamment faible et en choisissant une matière suffisamment flexible à cette épaisseur).

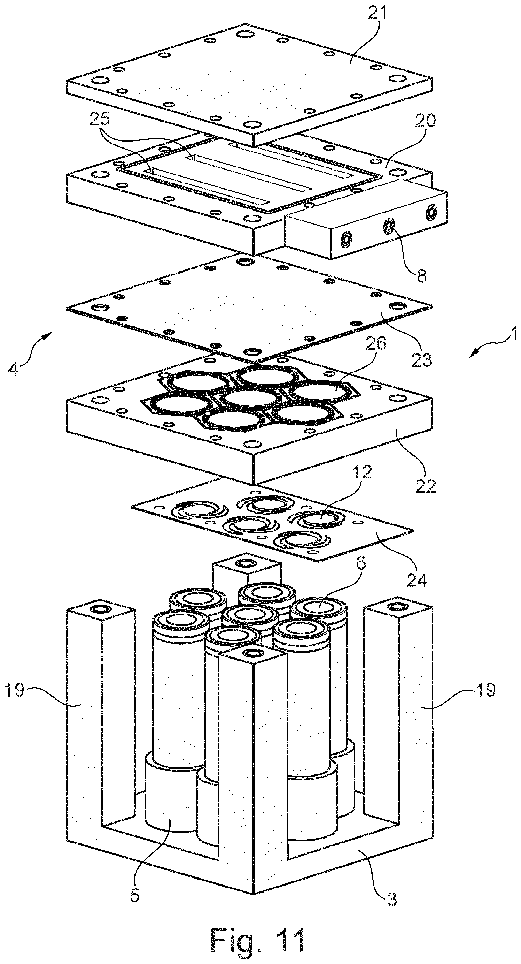

Les figures 11 à 15 illustrent un autre mode de réalisation de l'enceinte 11 à volume variable.

La figure 11 est une vue éclatée d'un module accumulateur électrochimique selon ce mode de réalisation. Ce module est similaire en tout point au module de la figure 8, si ce n'est la constitution de la première paroi d'appui 4 qui est ici formée des éléments empilés suivants :
- un corps 20 refermé par un couvercle 21 ;
- un support d'actionneur 22 ;
- une membrane souple 23 serrée entre le corps 20 et le support d'actionneur 22 ;
- un clinquant 24 (dont seule une moitié est représentée pour des raisons de clarté de la figure).

Le corps 20 est une pièce rigide de matériau plein de forme parallélépipédique, qui porte les raccords fluidiques 8 ainsi que le réseau de conduits fluidiques 14 dans son épaisseur. Dans cet exemple, trois conduits fluidiques 14 sont formés dans l'épaisseur du corps 20, reliant les raccords fluidiques 8 à des rainures formant des chambres internes 25 qui débouchent de part et d'autre de l'épaisseur du corps 20. Le corps 20 est ici adapté à une fabrication aisée et peu coûteuse par usinage.

Le couvercle 21 referme de manière étanche la face supérieure du corps 20.

La membrane souple 23 ferme quant à elle la face inférieure du corps 20 de sorte que, lorsque la pression dans les conduits fluidiques 14 augmente, la membrane souple 23 se déforme en direction des accumulateurs 6.

L'enceinte 11 à volume variable est donc ici constituée par les chambres internes 25 et leur cloisonnement assuré par le couvercle 21 et par la membrane souple 23.

Le support d'actionneur 22 est fait d'une pièce de matériau rigide comportant des entretoises mobiles 26. Les entretoises mobiles 26 sont adaptées à se déplacer transversalement dans des alésages du support d'actionneur 22. Les entretoises mobiles 26 peuvent être par exemple constituées de cylindres de matériau plein, du même matériau que le support d'actionneur 22, avec des ressorts en spirale les reliant au support d'actionneur 22.

Le clinquant 24 est une feuille de matériau électriquement conducteur, par exemple une feuille métallique, et comporte dans cet exemple des évidements en spirale définissant les contacts électriques mobiles 12 ainsi que les conducteurs de jonction 13.

Dans cet exemple, le clinquant 24 assure une continuité électrique entre tous les contacts électriques mobiles 12.

Dans ce mode de réalisation, la zone frangible de l'enveloppe de l'enceinte 11 à volume variable est réalisée par la membrane souple 23, dont le matériau et l'épaisseur sont choisis pour que la membrane souple 23 soit adaptée à se perforer en cas d'avarie. En cas d'avarie, la chaleur, le feu, ou les éléments projetés passent à travers les évidements en spirale du clinquant 24 et des ressorts en spirale du support d'actionneur 22, pour venir sur la membrane souple 23.

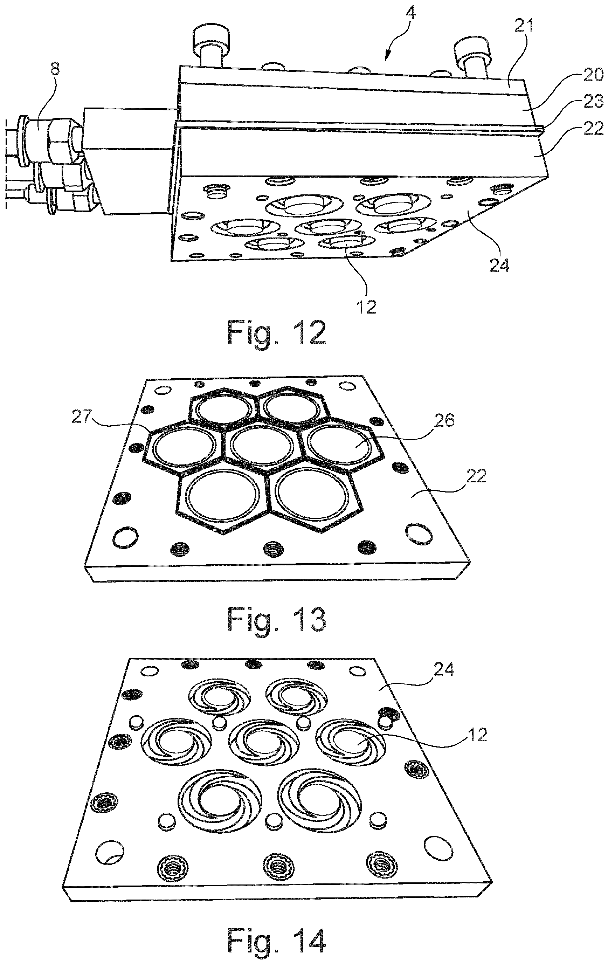

La figure 12 est une vue latérale en perspective illustrant l'assemblage formant la première paroi d'appui 4, avec la membrane souple 23 serrée par des vis entre le corps 20 et le support d'actionneur 22, ainsi que les raccords fluidiques 8 saillants latéralement.

La figure 13 est une vue du dessus du support d'actionneur 22 montrant l'agencement des entretoises mobiles 26 ainsi que des cloisons 27 permettant de pincer la membrane souple 23.

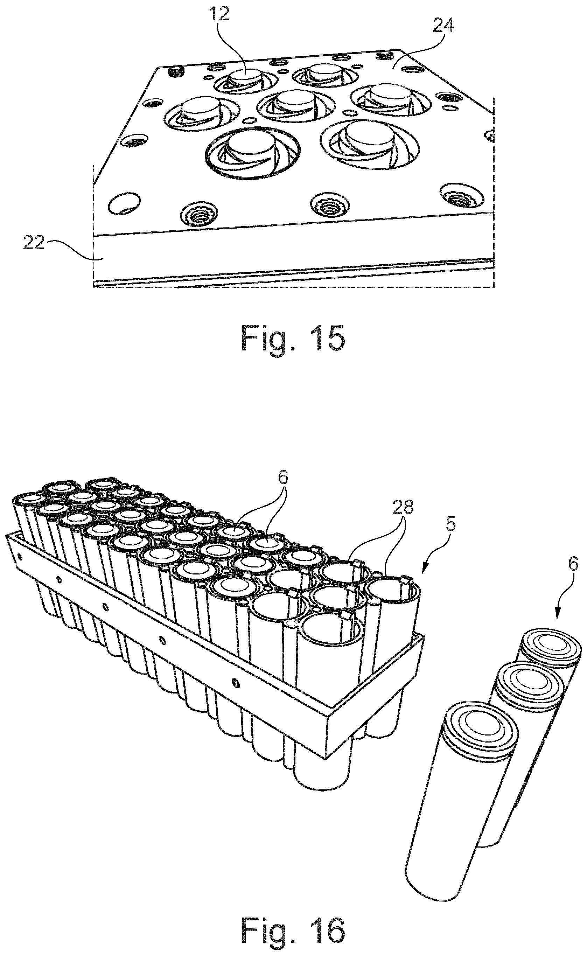

Les figures 14 et 15 sont des vues de dessous du support d'actionneur 22, montrant la liaison élastique entre les entretoises mobiles 26 et le support d'actionneur par des ressorts en spirale. Sur la figure 14, les connecteurs coupe-circuit 7 sont désactivés, les entretoises mobiles 26 ne sollicitant pas le clinquant 24. Sur la figure 15, les connecteurs coupe-circuit 7 sont activés, la mise en pression des enceintes 11 à volume variable entrainant une déformation de la membrane souple 23, qui repousse les entretoises mobiles 26 en direction du clinquant 24, de sorte que les contacts électriques mobiles 12 soient sollicités en direction des accumulateurs 6.

Dans cet exemple, le support d'actionneur 22, les entretoises mobiles 26 et les lames ressort reliant ces deux pièces sont réalisés en une pièce par fabrication additive.

Dans ce mode de réalisation, le moyen élastique sollicitant l'enceinte 11 à volume variable vers une position de repos est constitué conjointement du clinquant 24, avec ses ressorts en spirale, et des entretoises mobiles 26, avec ses ressorts en spirale. En variante, l'un seulement de ces éléments pourrait assurer la fonction dudit moyen élastique.

Les figures 16 à 19 illustrent un procédé de montage et connexion d'un module accumulateur électrochimique, mettant en oeuvre un boitier 1 selon l'invention, destiné à la production d'une batterie neuve, ou dans le cadre d'une opération de maintenance, ou de reconditionnement, d'une batterie existante. Le procédé de connexion comporte une étape de mise en pression d'un fluide dans le réseau de conduits fluidiques 14.

Ces figures 16 à 19 sont relatives à un boitier 1 selon un mode de réalisation dans lequel les logements 5 sont formés d'un ensemble d'alvéoles cylindriques 28 destinées à contenir des accumulateurs 6 également cylindriques. Le reste du fonctionnement des connecteurs électriques 7 correspond aux autres modes de réalisation décrits précédemment.

La figure 16 illustre la mise en place des accumulateurs 6 dans les alvéoles cylindriques 28 constituant les logements 5.

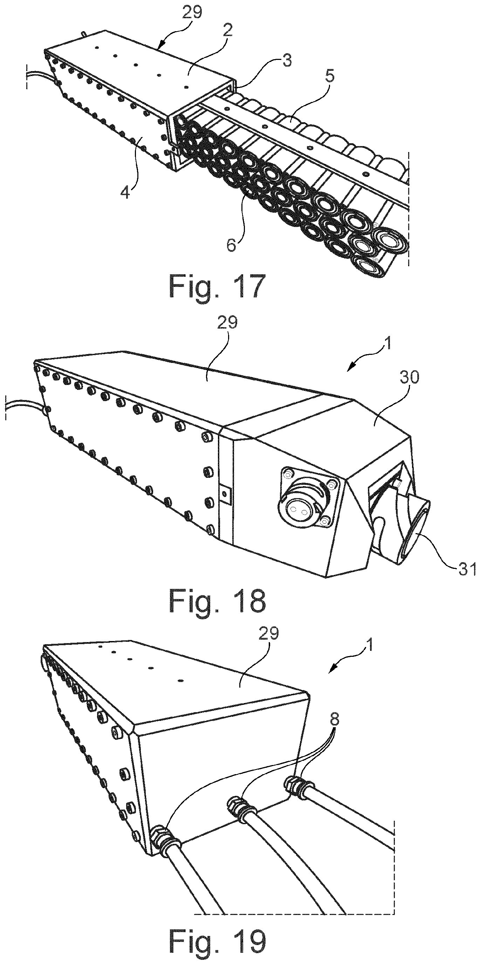

La figure 17 illustre l'étape suivante, dans laquelle l'ensemble des logements 5 est inséré dans un contenant 29 qui comprend les parois latérales 2, la deuxième paroi d'appui 3 et la première paroi d'appui 4, en vis-à-vis l'une de l'autre, et plus précisément sensiblement parallèlement l'une à l'autre. Les logements 5 maintiennent les accumulateurs 6 fixes par rapport aux parois 3,4.

La figure 18 illustre l'étape suivante, dans laquelle un couvercle de connexion 30 vient refermer le contenant 29. Ce couvercle de connexion 30 est muni de la connectique 31 nécessaire à la liaison électrique avec les accumulateurs 6, selon l'architecture prévue pour le boitier 1, ainsi qu'avec d'éventuels capteurs situés dans le boitier 1.

La figure 19 illustre la face du boitier 1 qui est opposée au couvercle de connexion 30, avec trois raccords fluidiques 8 saillants, constituant ainsi le module accumulateur électrochimique.

Le module accumulateur électrochimique peut ensuite être stocké, transporté, livré, etc. sans avoir été connecté et donc sans présenter de danger. La possibilité de connecter les accumulateurs une fois le boitier fermé permet de limiter le risque d'électrocution et de court-circuit pour l'opérateur lors des étapes de montage. Lors de la phase de transport, les accumulateurs peuvent rester déconnectés pour minimiser le risque d'emballement thermique. Ceci est particulièrement adapté aux packs batteries qui présentent un danger d'électrisation, un risque de feu, et un risque chimique en cas d'emballement thermique, par exemple les packs batteries de véhicule électrique dont la tension est régulièrement de l'ordre de 400 volts.

Une fois que le module est mis en service, prêt à être connecté, le réseau de conduits fluidiques 14 est alors mis en pression, par exemple par un gaz comprimé à une pression, dans cet exemple, qui va de 1 à 20 bars.

De préférence, cette mise en pression est réalisée en deux temps : dans un premier temps, une faible pression est appliquée au réseau de conduits fluidiques 14, de sorte que l'enceinte 11 à volume variable se déforme lentement et entraine chaque contact électrique mobile 12 à venir approcher puis au contact de l'électrode sur l'accumulateur 6 correspondant.

Dans un deuxième temps, la pression est fortement augmentée pour appuyer le le contact électrique mobile 12, le sécuriser, et le maintenir dans le temps malgré les chocs et les vibrations propres aux applications en milieu difficile.

Le module accumulateur électrochimique, avec son boitier 1, peut alors être mis en service au sein d'un pack batterie, par exemple pour un véhicule électrique ou un équipement stationnaire. En cas d'avarie, l'enceinte 11 à volume variable de l'accumulateur 6 concerné sera perforée, et le connecteur coupe-circuit concerné va immédiatement déconnecter cet accumulateur 6, ou un ensemble d'accumulateurs prédéfini (voire tous les accumulateurs), et garantir ainsi la sécurité du pack batterie.

Ainsi, chaque connecteur coupe-circuit 7 est disposé en vis-à-vis de l'accumulateur 6 correspondant de sorte que si l'accumulateur 6 venait à subir une avarie tels que surchauffe, départ de feu, dégazage par ouverture de l'évent de sécurité, voire explosion, l'enceinte 11 à volume variable serait de ce fait endommagée et une fuite serait créée par perçage de l'enveloppe formant l'enceinte 11 à volume variable. Une telle fuite aurait pour effet de faire chuter la pression dans l'ensemble des conduits fluidiques 14, ou dans le tronçon concerné du réseau de conduits fluidiques 14, ce qui déconnecterait en conséquence aussi bien l'accumulateur 6 défectueux que les accumulateurs voisins du même tronçon. Cette déconnexion se fait en réaction directe à l'incident, et ne nécessite aucun capteur, aucun traitement d'information, ni aucun apport d'énergie. Cette déconnexion procure une fonction de sécurité passive au boitier 1, avec un niveau élevé de fiabilité pour répondre à une problématique critique touchant notamment les batteries de chimie lithium.

De plus, la fuite provoque une coulée du fluide des conduits fluidiques 14 vers l'accumulateur à l'origine de l'incident, de sorte qu'une action directe et localisée sur l'accumulateur permet de minimiser, voire d'arrêter l'incident au plus tôt. Pour cette fonction de sécurité passive doublée d'une action corrective localisée, le moyen de mise en pression 16 alimente de préférence le réseau de conduits fluidiques 14 avec un gaz inerte, adapté donc à minimiser les dégâts causés par l'incident, ou avec un fluide ayant des propriétés d'extinction ou de refroidissement (par exemple, des composés gazeux à base d'argon et de diazote).

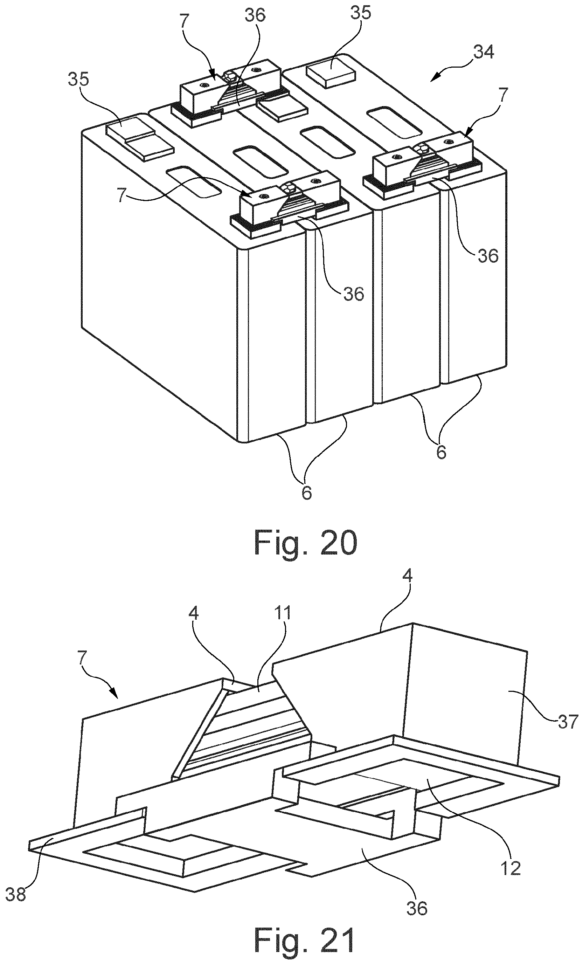

La figure 20 illustre un exemple de module 34 accumulateur électrochimique composé ici de quatre accumulateurs 6.

Le module 34 est formé par l'assemblage physique des accumulateurs 6 par un boitier et/ou des moyens de contention (non représentés) et par des éléments d'interconnexion selon l'invention pour les accumulateurs 6.

Les accumulateurs 6 comportent chacun deux bornes 35 et, dans cet exemple, ces bornes 35 sont interconnectées deux à deux pour mettre les accumulateurs 6 en série.

À cet effet, deux bornes adjacentes d'accumulateurs 6 juxtaposées sont électriquement raccordées par un élément d'interconnexion comportant un connecteur coupe-circuit 7 qui permet de maintenir une connexion sécurisée et de déconnecter les bornes 35 concernées en cas d'avarie.

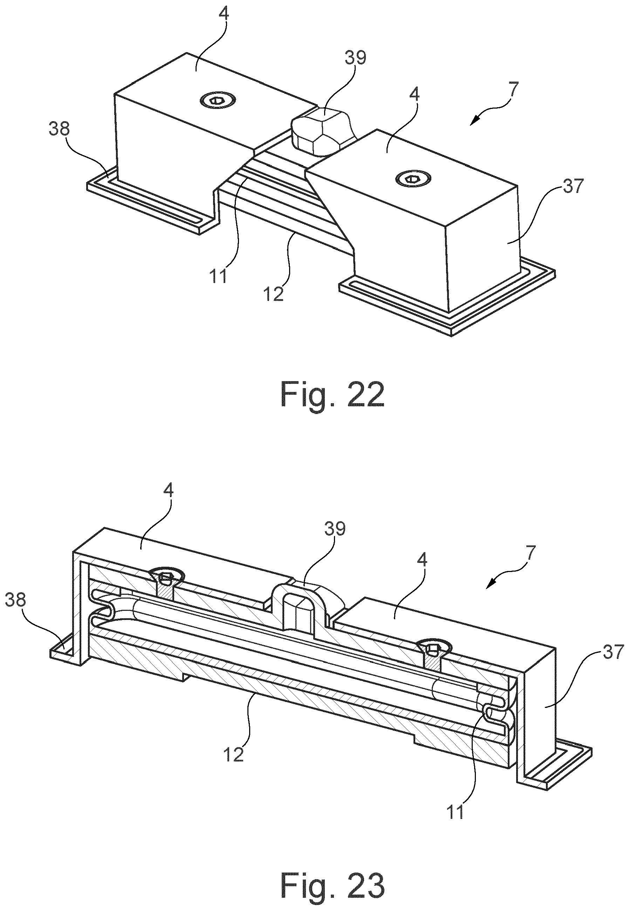

Les figures 21 et 22 illustrent selon deux perspectives différentes l'un des éléments d'interconnexion de la figure 20.

La figure 21 représente de plus une bride 36 servant de butée basse pour l'enceinte 11 à volume variable et le contact électrique mobile 12. L'élément d'interconnexion est fixé sur le corps ou aux bornes des accumulateurs 6 (par exemple par soudage) et l'élément d'interconnexion comporte donc une première paroi d'appui 4 qui est ainsi maintenue en vis-à-vis des bornes 35. Dans cet exemple, l'élément d'interconnexion comporte un boitier 37 muni d'une collerette périphérique 38 sur laquelle s'appuie la bride 36, ce boitier 37 portant la première paroi d'appui 4 (dans cet exemple, sous la forme de deux parois séparées).

Le boitier 37 comporte également un connecteur coupe-circuit 7 qui comporte une enceinte 11 à volume variable rattachée à un contact électrique mobile 12 adapté à connecter électriquement deux bornes 35. Le boitier 37 est fixé par sa collerette 38 sur les accumulateurs 6 de sorte que l'augmentation de volume de l'enceinte 11 à volume variable résulte en une pression de cette dernière en direction des accumulateurs 6.

La figure 23 est une vue en coupe d'un des éléments d'interconnexion. L'enceinte 11 à volume variable est ici réalisée par un soufflet dans un matériau élastiquement déformable, soufflet dont le matériau est choisi pour former à ce niveau la portion frangible de l'enveloppe de l'enceinte 11 à volume variable. Le contact électrique mobile 12 est constitué d'une barre conductrice fixée sur l'enceinte à volume variable 11, à l'opposé de la première paroi d'appui 4, et peut comporter des portions ajourées donnant accès aux portions frangibles de l'enceinte 11 à volume variable, favorisant sa perforation en cas d'avarie.

L'enceinte à volume variable 11 peut comporter un raccord fluidique 39 (constitué ici par une valve) par lequel l'enceinte 11 peut être emplie d'un fluide mis en pression. Le connecteur coupe-circuit 7 est ainsi activé par la mise en pression des enceintes 11 à volume variable comme décrit dans les modes de réalisation précédents, lors de la mise en service de l'accumulateur électrique 34.

Alternativement, l'enceinte 11 à volume variable peut être mise en pression dès la production du connecteur coupe-circuit 7, et sa mise en place sur les accumulateurs 6 entraine immédiatement leur connexion. La mise en place des éléments d'interconnexion sur les accumulateurs 6 se fait alors en comprimant l'enceinte 11 à volume variable.

La déconnexion des accumulateurs 6 n'aura ensuite lieu que lors d'une avarie, ou du démontage du module 34. Une telle avarie peut être intempestive comme décrit précédemment, ou elle peut être provoquée dans le cas par exemple du recyclage d'un pack batterie, l'enveloppe des enceintes 11 à volume variable pouvant être intentionnellement perforée par un outil ou par un dispositif.

Lorsque l'enceinte 11 à volume variable est mise en pression, une force s'exerce entre la première paroi d'appui 4 et l'accumulateur 6 sur lequel l'élément d'interconnexion est fixé (par exemple par soudage), provoquant une force de connexion entre le contact électrique mobile 12 et les bornes 35 des accumulateurs 6.

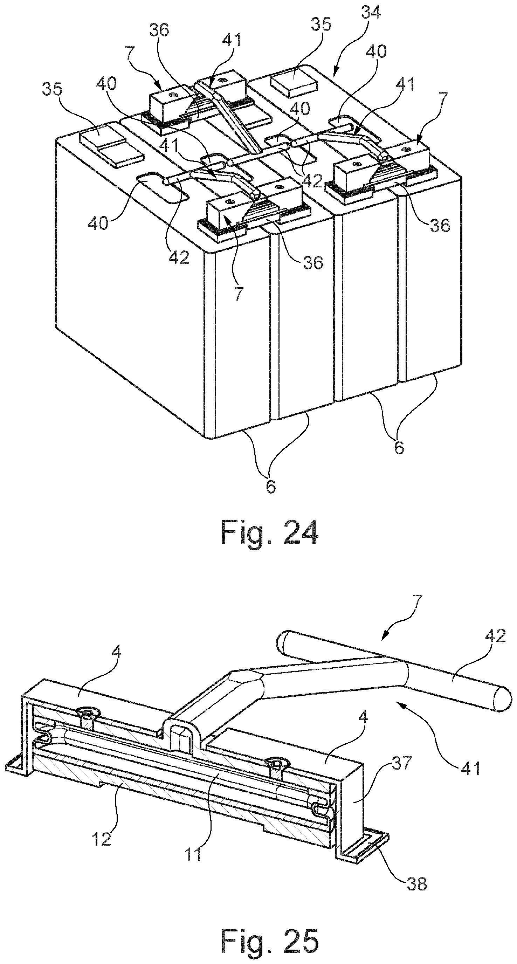

La figure 24 illustre un module accumulateur électrochimique 34 selon une variante par rapport au mode de réalisation de la figure 20. Selon cette variante, l'enceinte 11 à volume variable comporte une extension 41 la prolongeant jusqu'au niveau des évents 40 des accumulateurs 6.

La figure 25 est une vue en perspective et en coupe d'un des éléments d'interconnexion de la figure 24. L'extension 41 est formée d'une enveloppe creuse en communication fluidique avec l'intérieur de l'enceinte 11 à volume variable. L'extension 41 comporte une portion d'extrémité 42 disposée transversalement et participant à la portion frangible de l'enveloppe de l'enceinte 11 à volume variable.

Cette portion d'extrémité 42 est ainsi conçue avec une paroi suffisamment fine et un matériau remplissant les spécifications pour la portion frangible.

Le connecteur coupe-circuit 7 est agencé de sorte que la portion d'extrémité 42, participant à la portion frangible, soit disposée en vis-à-vis d'une zone particulièrement exposée en cas d'avarie de l'accumulateur 6. Dans le présent exemple, cette zone particulièrement exposée est choisie comme étant l'évent 40 de chaque accumulateur car, dans cet exemple, les accumulateurs 6 sont conçus de sorte qu'une explosion ou une éjection de matériaux, en cas d'avarie, se fasse par l'évent 40.

Ainsi, en cas d'avarie, les projections et/ou la chaleur dégagée au niveau de l'évent 40 entrainent le percement de cet évent 40 et entrainent la rupture de la portion frangible, provoquant la déconnexion du connecteur coupe-circuit 7.

Les portions d'extrémité 42 sont dimensionnées pour que chacune s'étende sur les deux évents 40 des deux accumulateurs 6 que ce connecteur coupe-circuit 7 connecte. Ainsi, une avarie sur l'un ou l'autre de ces accumulateurs 6 voisins entraine la suppression de leur interconnexion.

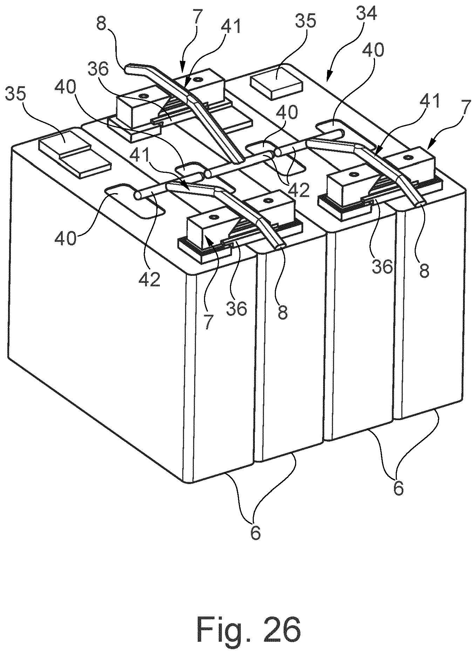

La figure 26 est une variante du mode de réalisation de la figure 24, dans lequel les connecteurs coupe-circuit 7 non seulement comportent une extension 41 telle décrite précédemment, mais comportent également un raccord fluidique 8 permettant les mêmes opérations que les raccords fluidiques des modes de réalisation précédents. Ce raccord fluidique 8 permet notamment la liaison à un moyen de mise en pression.

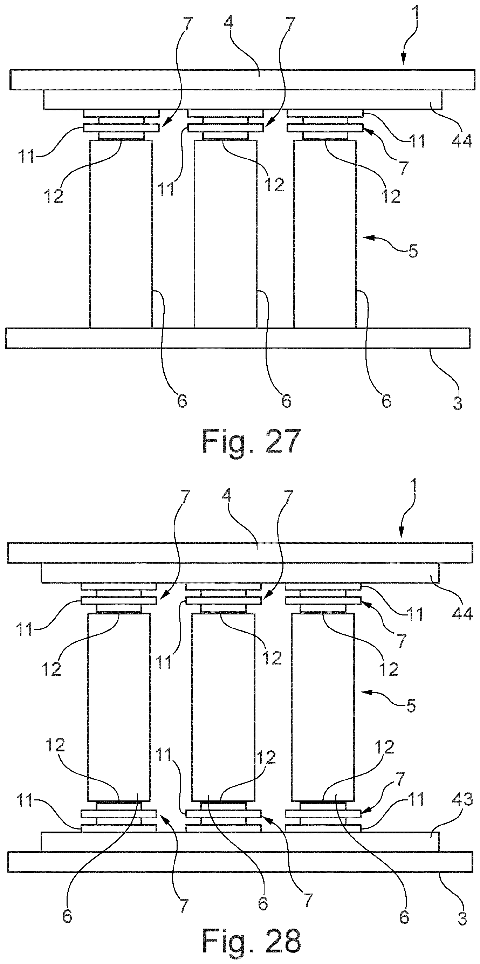

La figure 27 illustre un autre mode de réalisation d'éléments d'interconnexion qui comportent ici un boitier 1, pour un module accumulateur électrochimique, et des connecteurs coupe-circuit 7 disposés à l'intérieur du boitier 1. Le boiter 1 contient les accumulateurs 6 formant le module. Les enceintes 11 à volume variable de ces connecteurs coupe-circuit 7 sont, par construction, mises en pression et fermées de manière hermétique, avant le montage avec les accumulateurs 6.

Chaque accumulateur 6 est ainsi connecté grâce au connecteur coupe-circuit 7 qui est interposé entre une électrode de l'accumulateur 6 et la première paroi d'appui 4. Dans cet exemple, les trois connecteurs coupe-circuit 7 comportent un socle commun 44 qui peut optionnellement relier fluidiquement les trois enceintes 11 à volume variable, de sorte que les trois connecteurs coupe-circuit 7 passeront en position désactivée simultanément, en cas d'avarie.

La mise en service d'un tel module accumulateur se fait en insérant les connecteurs coupe-circuit 7 entre les accumulateurs 6 et la première paroi d'appui 4. Cette insertion se fait avec une phase de compression des enceintes 11 à volume variable, que ce soit lors de la mise en place du connecteur coupe-circuit 7 ou de la mise en place de l'accumulateur 6. Cette phase de compression peut aussi se faire simplement avec la surface d'appui 4, alternativement 3, prévue(s) mobile(s) pour le montage, sous forme d'un couvercle venant fermer le boitier.

Ce mode de réalisation bénéficie d'une grande simplicité et robustesse, tout en assurant la sécurité passive évoquée précédemment.

De même que précédemment, l'enceinte 11 à volume variable dispose d'une enveloppe munie d'une portion frangible qui sera percée en cas d'avarie.

La figure 28 illustre un autre mode de réalisation dans lequel les éléments d'interconnexion comportent un boitier 1 et des connecteurs coupe-circuit 7 disposés sur la première paroi d'appui 4 (comme dans le mode de réalisation de la figure 27) et comportent en outre d'autres connecteurs coupe-circuit 7 identiques insérés entre les accumulateurs 6 et la deuxième paroi d'appui 3.

Les deux électrodes de chaque accumulateur 6, disposés dans le présent exemple aux deux extrémités opposées des accumulateurs 6, sont donc connectés par deux connecteurs coupe-circuit 7 opposés, dont l'enceinte 11 à volume variable est comprimée.

Des variantes de réalisation peuvent être envisagées pour tous les modes de réalisation. Notamment, les première et deuxième parois d'appui 4,3 peuvent ne comporter que des éléments structurels minimaux (poutres, structure tubulaire, parois ajourées) pour supporter l'appui des accumulateurs 6, les connecteurs coupe-circuit 7, et le passage des conduits fluidiques 14. De même, le réseau de conduits fluidiques 14 peut cheminer différemment que dans l'épaisseur de matière de la première paroi d'appui 4, par exemple, à la surface de cette première paroi d'appui 4, ou encore, par des conduits extérieurs rapportés sur la paroi.

Par ailleurs, les raccords fluidiques 8 peuvent ne pas être saillants directement de la première paroi d'appui 4, mais peuvent cheminer par d'autres parois du boitier 1, grâce à des jonctions étanches.

Le fluide mis en pression dans l'enceinte à volume variable peut être un gaz (exemple : air, CO2), un gaz inerte (exemple : argon), un liquide (exemple : eau, huile, fluide diélectrique), ou tout autre substance adaptées à la fonction décrite, par exemple une mousse diélectrique.

## Revendications

1. Élément d'interconnexion de module accumulateur électrochimique, adapté à interconnecter des accumulateurs électrochimiques (6), comportant une première paroi d'appui (4) et au moins un connecteur coupe-circuit (7) disposé sur la première paroi d'appui (4), ce connecteur coupe-circuit (7) comportant :
- une enceinte (11) à volume variable contenant un fluide sous pression et comportant une enveloppe munie d'au moins une portion frangible ;
- un contact électrique mobile (12) adapté à être déplacé par l'enceinte (11) à volume variable selon une direction de déconnexion ;
- un moyen élastique sollicitant l'enceinte (11) à volume variable vers une position de repos dans laquelle le contact électrique mobile (12) est maintenu en deçà d'une distance prédéterminée de la première paroi d'appui (4).

2. Élément d'interconnexion selon la revendication 1, **caractérisé en ce que** l'enceinte (11) à volume variable est formée par une enveloppe élastiquement déformable comportant ladite zone frangible.

3. Élément d'interconnexion selon la revendication 2, **caractérisé en ce que** l'enveloppe élastiquement déformable est formée par un prolongement de matière de la première paroi d'appui (4).

4. Élément d'interconnexion selon l'une des revendications 2 ou 3, **caractérisé en ce que** l'enveloppe élastiquement déformable présente une forme cylindrique avec au moins une zone de section réduite et au moins une zone frangible.

5. Élément d'interconnexion selon l'une des revendications précédentes, **caractérisé en ce que** le contact électrique mobile (12) est formé par un revêtement de surface conducteur appliqué sur l'enceinte (11) à volume variable.

6. Élément d'interconnexion selon la revendication 1, **caractérisé en ce que** l'enceinte (11) à volume variable comporte une membrane souple (23) disposée dans la première paroi d'appui (4).

7. Élément d'interconnexion selon l'une des revendications précédentes, **caractérisé en ce que** la portion frangible est constituée d'un matériau dont la température de fusion est inférieure à 120°C.

8. Élément d'interconnexion selon l'une des revendications précédentes, **caractérisé en ce que** la première paroi d'appui (4) et l'enceinte (11) à volume variable sont faits d'une seule pièce.

9. Élément d'interconnexion selon l'une des revendications précédentes, **caractérisé en ce qu'**il comporte une pluralité desdits connecteurs coupe-circuit (7) dont les enceintes (11) à volume variable sont fluidiquement reliées entre elles par un réseau de conduits fluidiques (14).

10. Élément d'interconnexion selon la revendication 9 **caractérisé en ce que** le réseau de conduits fluidiques (14) comporte une pluralité de tronçons indépendants, chacun de ces tronçons comportant au moins un conduit fluidique (14) et une pluralité d'enceintes (11) à volume variable des connecteurs coupe-circuit (7), fluidiquement reliés entre eux.

11. Élément d'interconnexion selon l'une des revendications précédentes, **caractérisé en ce que** l'enceinte à volume variable est fluidiquement reliée à un raccord fluidique (8) saillant.

12. Élément d'interconnexion selon l'une des revendications précédentes, **caractérisé en ce qu'**il comporte un moyen de mise en pression (16) d'un fluide, fluidiquement relié à l'enceinte (11) à volume variable.

13. Élément d'interconnexion selon l'une des revendications précédentes, **caractérisé en ce qu'**il comporte un boitier (1) qui comprend la première paroi d'appui (4) et qui comprend en outre :
- une deuxième paroi d'appui (3), en vis-à-vis de la première paroi d'appui (4) ;
- un logement (5) pour un accumulateur électrochimique, ce logement (5) s'étendant entre la première paroi d'appui (4) et la deuxième paroi d'appui (3).

14. Élément d'interconnexion selon la revendication 13, **caractérisé en ce qu'**il comporte en outre au moins un desdits connecteurs coupe-circuit (7) monté sur la deuxième paroi d'appui (3).

15. Élément d'interconnexion selon l'une des revendications 1 à 12, **caractérisé en ce qu'**il comporte un boitier (37) qui comprend la première paroi d'appui (4) ainsi que des moyens de fixation du boitier (37) sur un accumulateur électrochimique (6).

16. Élément d'interconnexion selon l'une des revendications précédentes, **caractérisé en ce que** l'enceinte (11) à volume variable comporte une extension (41) de prolongement, faisant partie de ladite portion frangible, formée d'une enveloppe creuse en communication fluidique avec l'enceinte (11) à volume variable.

17. Module accumulateur électrochimique comportant au moins un accumulateur électrochimique (6), **caractérisé en ce qu'**il comporte un élément d'interconnexion selon l'une des revendications 1 à 16.

18. Module selon la revendication 17, **caractérisé en ce que** la portion frangible est disposée en vis-à-vis de l'accumulateur (6).

19. Module selon la revendication 17 lorsqu'elle dépend de la revendication 16, **caractérisé en ce que** l'extension (41) est disposée en vis-à-vis d'un évent de l'accumulateur (6).

20. Module selon la revendication 18, **caractérisé en ce qu'**au moins une partie de la portion frangible est en vis-à-vis d'un évent de l'accumulateur (6), préférentiellement sur un chemin d'éventage des gaz.
